# EUROPÄISCHE PATENTSCHRIFT

(11) **EP 0 730 998 B1**
(45) Veröffentlichungstag und Bekanntmachung des Hinweises auf die Patenterteilung: **23.07.1997**
(21) Anmeldenummer: 96102687.9
(22) Anmeldetag: 22.02.1996
(51) Int. Cl.: B60R 13/07

(54) **Abdeckleiste für eine in ein Fahrzeugdach eingelassene Rinne**
Covering strip assembly for a vehicle roof rack channel
Baguette de recouvrement d'une gouttière de toit de véhicule

(30) Priorität: 10.03.1995 DE 19508710
(43) Veröffentlichungstag der Anmeldung: 11.09.1996
(73) Patentinhaber: Schade GmbH & Co. KG, 58840 Plettenberg (DE)
(72) Erfinder: Lohmann, Horst, 59846 Sundern (DE)
(74) Vertreter: Gossel, Hans K., Dipl.-Ing.

(56) Entgegenhaltungen:
- DE-A- 3 313 327

## Beschreibung

Die Erfindung betrifft eine Abdeckleiste für eine in ein Fahrzeugdach eingelassene Rinne zur Aufnahme und Halterung eines Dachlastenträgers, dessen Stützfüße durch in der Abdeckleiste vorgesehene Öffnungen hindurchgreifen, die durch in Längsrichtung der Abdeckleiste hin- und herbewegliche, durch Federn oder dergleichen belastete Schieber derart verschließbar sind, daß in den Verschlußstellungen die der Rinne abgewandten Außenflächen der Schieber im wesentlichen flächenbündig zu der Außenfläche der Abdeckleiste stehen und die Schieber in den Offenstellungen von außen verdeckte Lagen unter der Abdeckleiste einnehmen.

Eine Abdeckleiste dieser Art, die dem Oberbegriff des Anspruches 1 entspricht, ist aus der DE 33 13 327 A der Anmelderin bekannt. Die Abdeckleiste, der Schieber und die Federn bilden dabei im montierten Zustand eine Funktionsgruppe, die zusammen in die in einem Fahrzeugdach vorgesehene Rinne eingesetzt und durch Rastmittel festgelegt wird. Die Montage des Schiebers in der Abdeckleiste ist bei der bekannten Ausführung relativ umständlich. Die sperrige Anordnung und Ausbildung der Rastelemente bedingt außerdem eine verhältnismäßig große Breite des Schiebers und damit auch der Abdeckleiste und führt zu einem erhöhten Materialaufwand. Ein weiterer Nachteil ergibt sich dadurch, daß beim Verfahren des Schiebers im Einbauzustand die freien Enden der Druckfedern auf Stegen der Abdeckleiste entlanggleiten und deshalb eine intervalmäßige Schmierung der Kontaktflächen notwendig wird, die von dem Benutzer eines mit solchen Abdeckleisten ausgestatteten Fahrzeuges mit großer Wahrscheinlichkeit nicht vorgenommen wird.

Der vorliegenden Erfindung liegt die Aufgabe zugrunde, eine Abdeckleiste mit Schieber und weiteren Bauteilen so auszubilden, daß diese bei geringstem Materialeinsatz herzustellen ist, im Betrieb völlig wartungsfrei arbeitet und in einfachster Weise montiert werden kann.

Diese Aufgabe wird gelöst, indem jeder Schieber mit einem mit diesem eine Baueinheit bildenden Schieberträger verbunden und gemeinsam mit dem Schieberträger in Längsrichtung der Abdeckleiste verschiebbar ist, und wobei die Federn derart geformt und angeordnet sind, daß sie sich ausschließlich zwischen dem Schieber und dem Schieberträger abstützen.

Die aus dem Schieber und dem Schieberträger gebildete Baueinheit ist je nach Ausführungsform weitgehend oder vollständig vormontierbar und als Modul mit wenigen Handgriffen in die Abdeckleiste einsetzbar. Da der Schieber gegenüber dem Schieberträger zwar höhenbeweglich ist, ansonsten aber der Schiebebewegung des Schieberträgers folgt, entfällt das nachteilige Entlanggleiten der Federn an seitlichen Führungsflächen der Abdeckleiste, wie bei dem genannten Stand der Technik. Da der Schieberträger so gestaltet werden kann, daß seitlich überstehende Gleitteile des Schiebers entfallen, kann dessen Breite erheblich geringer sein als bei der vorbekannten Ausführung. Die Federn können durch entsprechende Gestaltung und durch eine angepaßte Auslegung des Schieberträgers ohne aufwendige Befestigungselemente lagegerecht in die Baueinheit integriert werden.

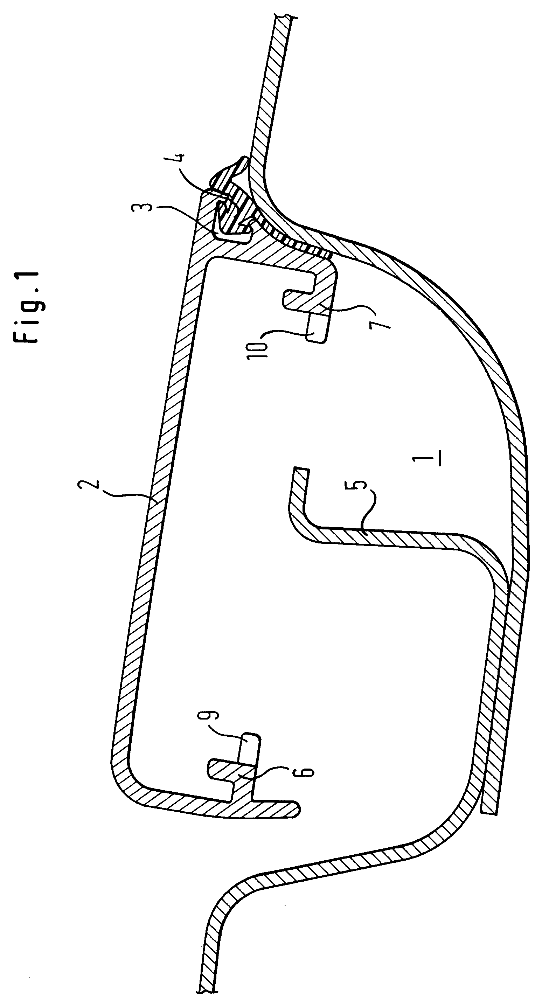

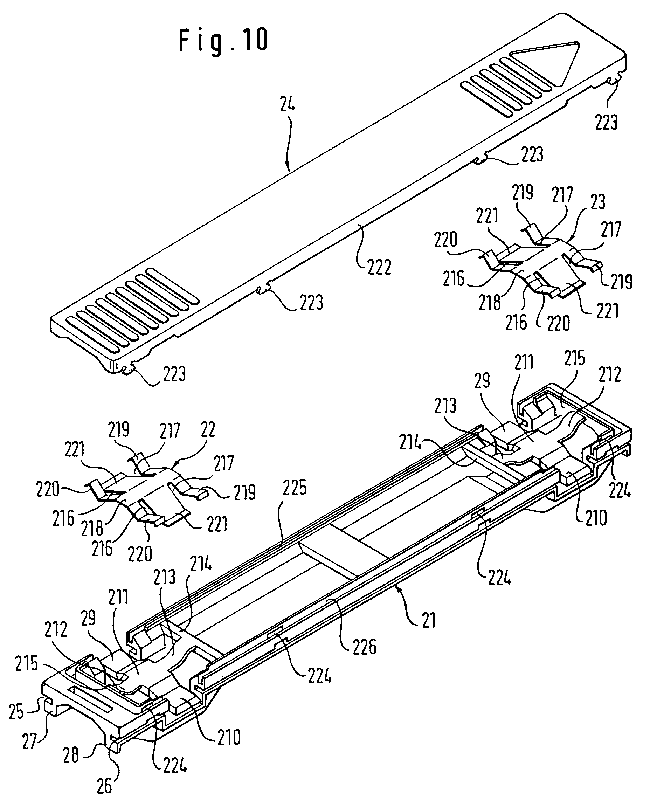

Bei der in der Figur 10 dargestellten Baueinheit von Schieber, Schieberträger und Formfedern ergibt sich der besondere Vorteil, daß die Baueinheit bereits in allen Einzelteilen vormontiert werden kann, so daß sie später als kompaktes Funktionsmodul mit einem Handgriff von unten her in die Öffnung der Abdeckleiste eingesetzt werden kann. Bei den Ausführungsbeispielen nach den Figuren 1 - 7 sowie 8, 9 und 11, 12 ist es im Unterschied dazu notwendig, nach dem Einsetzen des Schieberträgers in die Abdeckleiste den Schieber von oben her nachträglich in der Abdeckleiste lösbar zu fixieren.

Bei der bevorzugten Ausführungsform nach Figur 10 ist vorgesehen, daß in jedem Endbereich der Schieberlänge jeweils eine Formfeder angeordnet ist. Dadurch wird vermieden, daß der Schieber gegenüber dem Schieberträger in der Einbaustellung unkontrolliert kippt. Eine einfache und sehr flache Gestaltung der Formfeder mit ausreichender Federkraft wird erreicht, wenn die Formfeder an jeder Längsseite vorgesehen ist und jede Formfeder zwei quer zu den Längskanten verlaufende Ein- oder Ausschnitte aufweist, wobei die in den Endbereichen liegenden von den Ein- oder Ausschnitten begrenzten Endzungen in Richtung zum Schieber abgewinkelt sind und wobei die zwischen den Ein- oder Ausschnitten liegenden Mittelzungen entgegengesetzt abgewinkelt sind. Durch die sehr geringe Bauhöhe der Feder kann auch die Bauhöhe der aus dem Schieber und dem Schieberträger gebildeten Baueinheit sehr flach gehalten werden. Dies läßt sich besonders einfach verwirklichen, wenn die Ein- oder Ausschnitte im Abstand zur Mittellängsachse der Formfeder enden, wobei die Endzungen zweifach abgewinkelt und die Mittelzungen einfach abgewinkelt sind. Durch die zweifache Abwinkelung der Endzungen zeigen die Endbereiche nach oben, so daß sich die freien Kanten in den Ecken des Schiebers abstützen können. Damit sich beim Absenken des Schiebers die Formfeder ungehindert verformen kann, ist zweckmäßig vorgesehen, daß die Längskanten der Mittelzungen gegenüber den Längskanten der Endzungen in Richtung zur Mittellängsachse der Formfeder verspringen. Vorteilhaft ist der der Mittellängsachse zugeordnete Bereich der Formfeder als ebene Fläche ausgebildet. Dadurch ist eine gute Anlage an der dem Schieberträger zugewandten Innenseite des Schiebers gewährleistet. Eine besonders einfache Ausführung des Schiebers ist gegeben, wenn dieser an den Längsseiten mit durchgehenden Seitenstegen versehen ist, die in den Endbereichen Widerlager für die Endzungen der Formfedern bilden. Zur Verbindung des Schiebers mit dem Schieberträger ist zweckmäßig vorgesehen, daß an die freien Kanten der Seitenstege Rastzungen angeformt sind. Diese können so gestaltet sein, daß sie unter Druckeinwirkung einrasten oder nachträglich verformt werden. Der Schieberträger ist dazu mit entsprechenden Rastausnehmungen versehen.

Zur einfachen und außerdem sehr sicheren Führung der aus dem Schieber und dem Schieberträger mit den integrierten Federn gebildeten Baueinheit ist vorgesehen, daß der Schieberträger an beiden Längsseiten mit in Längsrichtung sich erstreckenden Führungsnuten versehen ist, in die Führungsstege der Abdeckleiste eingreifen. Damit das Einsetzen der Baueinheit in die Öffnung der Abdeckleiste als komplett vormontierte Einheit von unten her in einfachster Weise und ohne Zuhilfenahme von Werkzeugen erfolgen kann, ist vorgesehen, daß die Führungsnuten in quer zur Ebene des Schieberträgers stehenden Stegen angeordnet sind. Um die montierte Baueinheit in der Schließstellung gegen Verschiebung zu sichern, ist vorgesehen, daß in den Stirnendbereichen des Schieberträgers lagegerecht zu den Mittelzungen der Formfedern federnde Gegenlager angeordnet sind, deren einander abgewandte Endbereiche in der Schließstellung in Ausklinkungen der Führungsstege der Abdeckleiste eingreifen. Weitere Merkmale und Vorteile der Ausführungsform nach der Figur 10 ergeben sich aus den Ansprüchen 13 bis 17.

Bei den Ausführungsformen nach den Figuren 1 bis 9 und 11, 12, die sich vom Prinzip von der Ausführung nach der Figur 10 dadurch unterscheiden, daß der Abdeckleistenschieber erst nach der zuerst erfolgenden Montage des Schieberträgers in der Abdeckleiste von oben her durch die in der Abdeckleiste vorgesehene Öffnung eingebracht wird, ergeben sich einzelne Merkmale und Vorteile aus den Ansprüchen 18 bis 27.

Dadurch, daß bei diesen Ausführungsvarianten der Schieber an der unteren Seite mit Gleitstegen versehen ist, die während der Bewegung des Schiebers in Längsrichtung der Abdeckleiste verlaufende und daran befestigte Führungsschienen untergreifen, wobei der Schieberträger in Führungsstegen der Abdeckleiste verschiebbar geführt ist, ergibt sich die besondere Funktion, daß nach dem Einsetzen des Schieberträgers in die Abdeckleiste und anschließendem Einsetzen der Feder und des Schiebers von oben her in den Schieberträger sowie nach dem Herunterdrücken des Schiebers entgegen der Federkraft durch den Schieber nach Überwindung eines relativ geringen Verschiebeweges in Längsrichtung der Abdeckleiste bewirkt wird, daß die Gleitstege des Schiebers die Führungsschienen untergreifen und der Schieber so in dieser eingedrückten Stellung verharren kann. Erst bei der weiteren Bewegung des Schiebers in Längsrichtung der Abdeckleiste erfolgt automatisch eine Mitnahme des Schieberträgers, welcher in der Abdeckleiste gleitend geführt wird.

Das Besondere und der wesentliche Vorteil bei allen beschriebenen Ausführungsformen ist darin zu sehen, daß der Schieber nicht direkt in der Abdeckleiste geführt wird, wie bisher, sondern indirekt über dem Schieberträger, mit dem er zusammen mit den entsprechenden Formfedern eine leicht montierbare komplette Baueinheit bildet.

Anhand der beiliegenden Zeichnungen, in denen bevorzugte Ausführungsbeispiele dargestellt sind, wird die Erfindung im nachstehenden näher erläutert.

Es zeigen:
- **Fig. 1**:: eine in ein Fahrzeugdach eingelassene Rinne sowie eine Abdeckleiste im Querschnitt,
- **Fig. 2:**: die Abdeckleiste nach Fig. 1 als Einzelheit in einer Teilperspektive, unter Hervorhebung der Öffnung für einen Schieber,
- **Fig. 3:**: den Schieber gemäß einem ersten Ausführungsbeispiel als Einzelheit in einer perspektivischen Darstellung,
- **Fig. 4:**: einen entsprechend angepaßten Schieberträger als Einzelheit, ebenfalls in einer perspektivischen Darstellung,
- **Fig. 5:**: die Einsetzphasen des Schieberträgers nach Figur 4 in die Abdeckleiste in verschiedenen Stellungen,
- **Fig. 6:**: das Einsetzen des Schiebers in den Schieberträger in drei verschiedenen Stellungen,
- **Fig. 7:**: die Abdeckleiste mit dem eingesetzten Schieberträger und dem Schieber entsprechend den Figuren 1 bis 6 im Querschnitt und in der Verschlußsstellung des Schiebers und der Schieberöffnung,
- **Fig. 8:**: einen in die Abdeckleiste eingesetzten Schieberträger mit dem Schieber gemäß einer abgewandelten zweiten Ausführungsform im Querschnitt und in der Verschlußstellung des Schiebers
- **Fig. 9:**: eine der Figur 8 entsprechende Darstellung des zweiten Ausführungsbeispieles, jedoch bei geöffneter Schieberöffnung,
- **Fig. 10:**: eine Explosivdarstellung einer aus Schieber, Schieberträger und Formfedern bestehenden komplett vormontierbaren Baueinheit gemäß einer dritten bevorzugten Ausführungsform der Erfindung,
- **Fig. 11:**: eine Abdeckleiste mit montierter Baueinheit gemäß einer vierten Ausführungsform und
- **Fig. 12:**: eine Baueinheit ähnlich Fig. 11, jedoch in einer abgewandelten fünften Ausführungsform

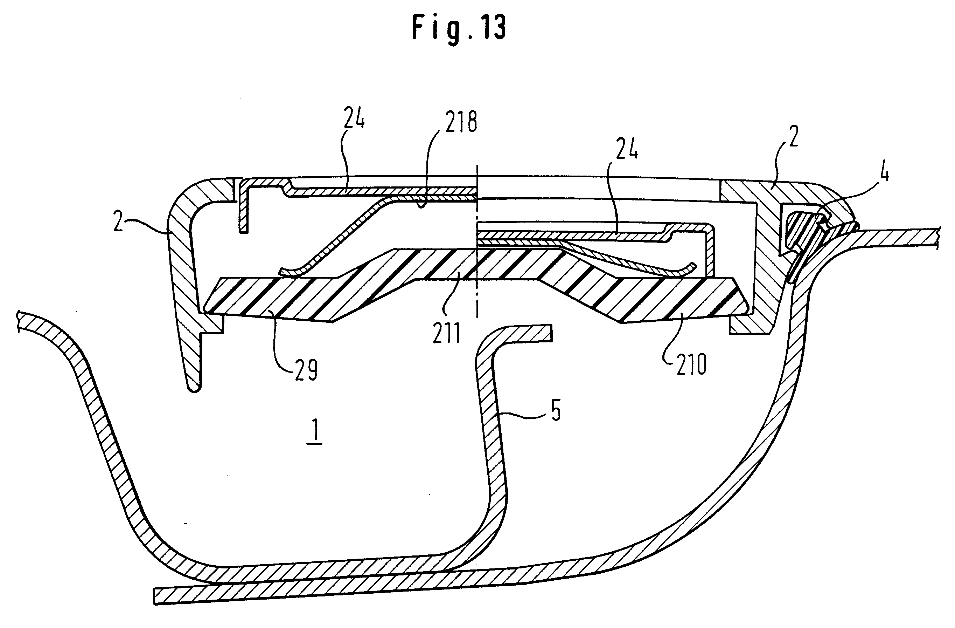

- **Fig. 13:**: einen Querschnitt durch den Schieber und Schieberträger nach Fig. 10 im Einbauzustand in dem Dachkanal, wobei sich die linke Hälfte des Schiebers und der Feder in der Schließstellung der Schieberöffnung befindet und die rechte Hälfte in der eingedrückten Offenstellung.

Alle Figuren - mit Ausnahme der Figur 10 - sind zur deutlicheren Darstellung im vergrößerten Maßstab gezeichnet.

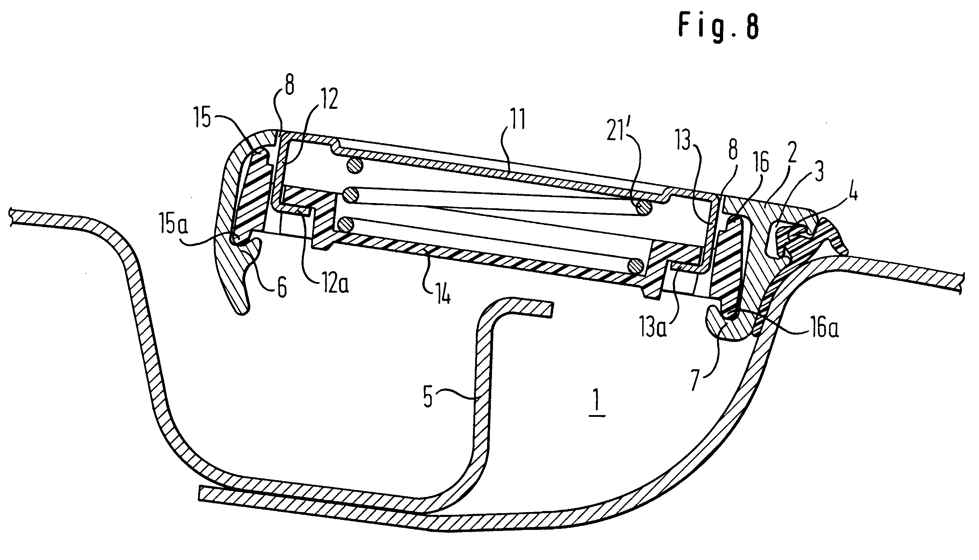

Im folgenden werden zunächst das erste Ausführungsbeispiel nach den Figuren 1 bis 7 sowie weitere Ausführungsbeispiele nach den Figuren 8 und 9 sowie 10 bis 12 beschrieben.

Die in das Fahrzeugdach eingelassene Rinne 1 ist durch eine Abdeckleiste 2 abgedeckt. An der in der Darstellung nach Fig. 1 rechten Seite ist die Abdeckleiste 1 mit einem Einschnitt 3 versehen, in den zur rastenden Festlegung ein entsprechendes gleichzeitig als Dichtung wirkendes Gegenstück 4 aus Gummi oder dergleichen eingreift, das am Fahrzeugdach in nicht näher erläuterter Weise festgelegt ist. In die Rinne 1 ragt ein abgewinkelter Blechrand 5 der Dachhaut hinein, dessen freies Ende etwa rechtwinklig nach außen absteht. Dieser Blechrand 5 dient der Halterung der Stützfüße des nicht dargestellten Dachlastenträgers. Die Abdeckleiste 2 hat einen etwa C-förmigen Querschnitt, wobei die beiden nach innen gerichteten unteren Stege 6, 7 etwa umgekehrt T-förmig ausgebildet sind. An der dem Einschnitt 3 gegenüberliegenden Seite steht der Rand der Abdeckleiste 2 gegenüber dem T-förmigen Steg 6 in Richtung zum Grund der Rinne 1 vor.

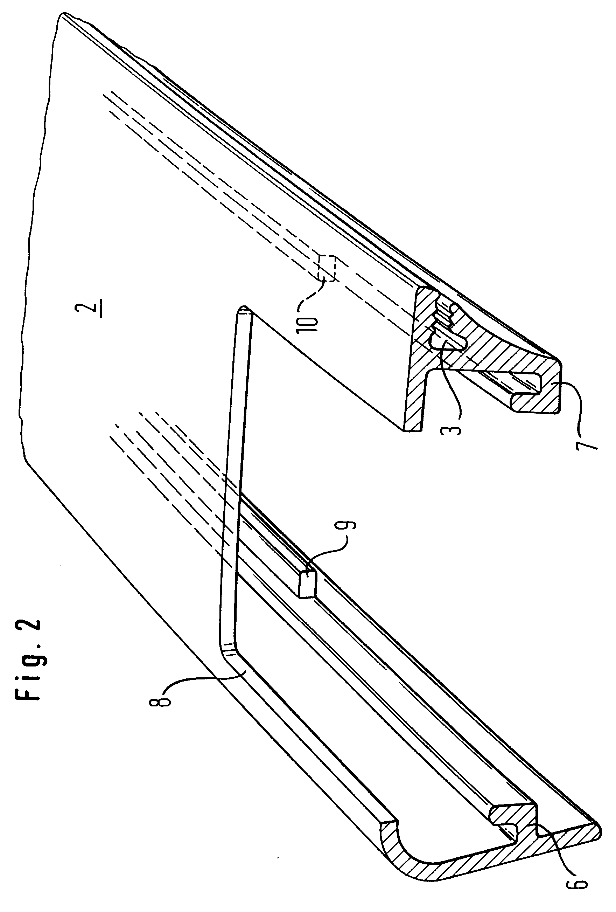

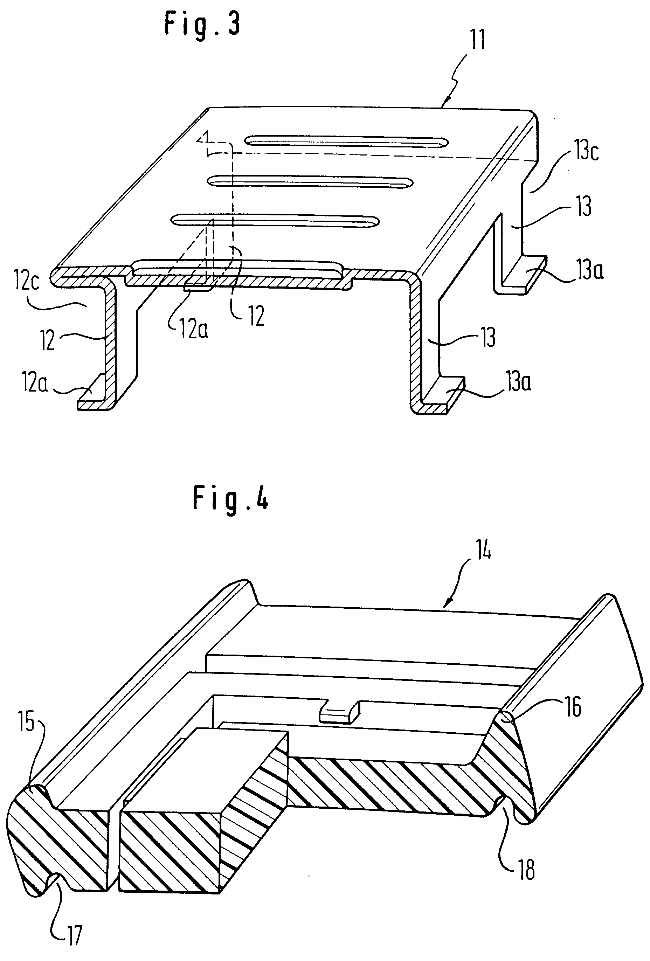

Die Fig. 2 zeigt die Abdeckleiste mit der Öffnung 8, als Einzeleiste. Dabei sind die T-förmigen Stege 6, 7 im Bereich der Öffnung 8 teilweise ausgeklinkt, indem die parallel zur Außenfläche der Abdeckleiste 2 verlaufenden äußeren einander, zugewandten Schenkelstege entfernt sind. Dadurch entstehen zwei Führungsschienen 9, 10 für einen in der Figur 3 als Einzelheit dargestellten Schieber 11. Bei diesem Ausführungsbeispiel ragen die Führungsschienen 9, 10 von oben gesehen bis in die Öffnung 8 hinein.

In der Figur 3 ist der Schieber 11 als Einzelheit dargestellt. Der Schieber ist im Querschnitt U-förmig ausgebildet, und an jeder Längsseite mit zwei Seitenstegen 12, 13 versehen, deren untere, freie Enden nach außen, d. h. gegeneinander abgewinkelt sind. Dadurch entstehen Gleitstege 12a, 13a. Die in der Darstellung der Fig. 3 hinteren Seitenstege 12, 12a, 13, 13a verspringen bei 13c in Richtung zu den gegenüberliegenden vorderen Seitenstegen des Schiebers. Die vorderen Seitenstege 12, 12a und 13, 13a liegen dagegen bündig zur Vorderkante des Schiebers 11.

Die Fig. 4 zeigt den Gleitträger bzw. Schieberträger 14 in einer ersten Ausführungsform. Er besteht aus einem elastischen Kunststoff oder einem ähnlichen Material, beispielsweise Gummi. An der Oberseite ist der Schieberträger 14 an beiden Längsseiten mit nach oben vorstehenden Wülsten 15, 16 versehen. An der unteren Seite weist der Schieberträger an beiden Längsseiten Führungsnuten 17, 18 auf. Außerdem ist der Schieberträger 14 mit Durchbrechungen versehen, durch die die Seitenstege 12, 13 und die Gleitstege 12a, 13a des Schiebers 11 von oben her hindurchgeführt werden können.

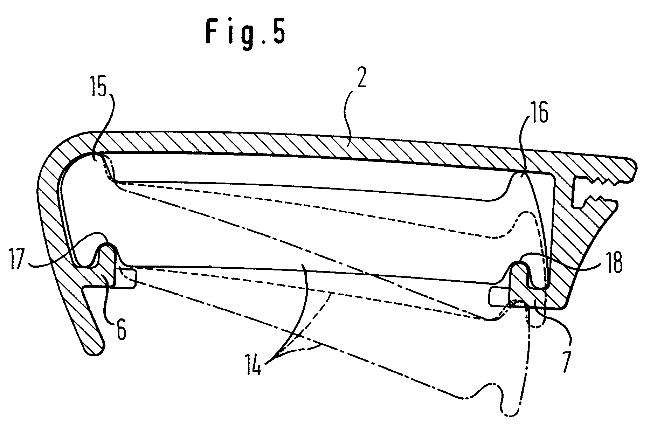

Die Fig. 5 zeigt, wie der Schieberträger 14 von unten her in die Abdeckleiste 2 eingesetzt wird. Dazu wird er zunächst in eine Schrägstellung gebracht, wobei die in der Darstellung linke Nut 17 einen nach oben gerichteten Schenkel des annähernd T-förmigen Steges 6 übergreift. Nach dem endgültigen Einsetzen übergreift die in der Darstellung rechte Führungsnut 18 den nach oben gerichteten Schenkel des annähernd T-förmigen Steges 7. Die vorstehenden Wülste 15, 16 stützen sich mit ihrem oberen Rand an der unteren Fläche der Abdeckleiste 2 ab. Die Figur 5 läßt auch erkennen, daß der Schieberträger 14 auf den Stegen 6, 7 in Längsrichtung der Abdeckleiste 2 verschiebbar ist.

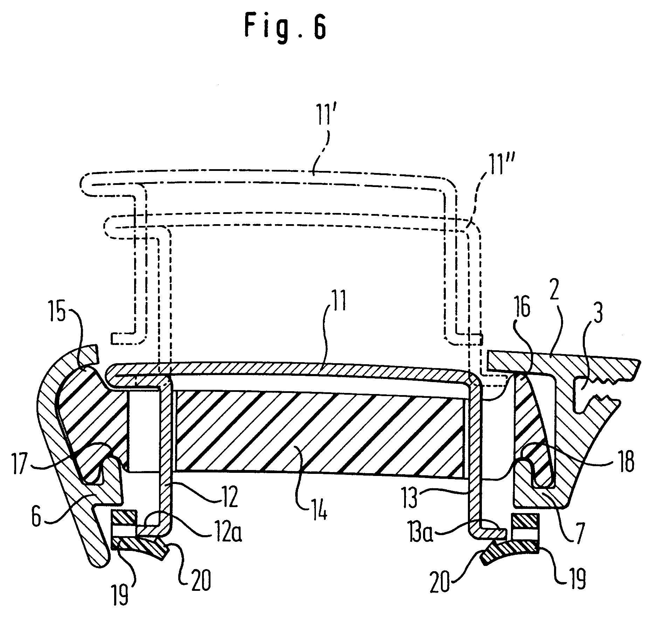

Die Fig. 6 zeigt das Einsetzen des Schiebers 11 in den in die Abdeckleiste eingesetzten Schieberträger 14. Danach wird in verschiedenen Stufen durch Druck von oben der Schieber 14 in die Funktionsstellung 11 gedrückt. Die beiden Zwischenstellungen sind durch die Bezugszeichen 11' und 11'' gekennzeichnet. Dadurch erfolgt ein Versatz des Schiebers 11 in Richtung zu dem Einschnitt 8 der Abdeckleiste 2. In dieser eingedrückten untersten Stellung des Schiebers 11 werden durch Druck von außen Rastnasen 20 von Gleitschienen 19 auf die abgewinkelten Gleitstege 12a, 13a aufgerastet. Dadurch wird jede Gleitschiene 19 mit dem zugeordneten Gleitsteg 12a, 13a, so verbunden, daß die Gleitschienen 19 der Bewegung des Schiebers 11 und damit auch des Schieberträgers 14 folgen. Die Gleitschienen 19 bilden damit auf beiden Seiten durchgehende Gleit- oder Führungsschienen.

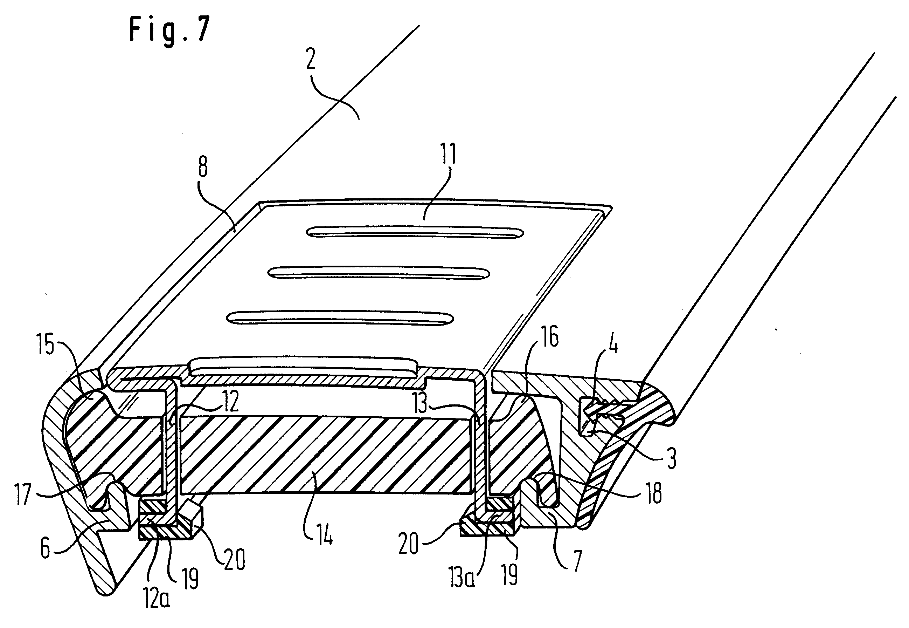

Die Fig. 7 zeigt den Schieber 11 in der Verschließstellung. Zur besseren Übersichtlichkeit ist die zwischen dem Schieber 11 und dem Schieberträger 14 eingesetzte Druckfeder, die zum Beispiel der Feder 21' in Fig. 8 entsprechen kann, nicht dargestellt. Durch leichten Druck von oben entgegen der Wirkung der Druckfeder wird der Schieber 11 nach unten bewegt. Dadurch werden die Gleitstege 12a, 13a mit den Gleitschienen 19, 20 unter die Führungsschienen 9, 10 (Fig. 1, 2) gedrückt und der Schieber 11 wird dadurch in dieser Stellung gehalten. Durch Verschieben des Schiebers 11 in Längsrichtung der Abdeckleiste 2 wird der Schieberträger 14 mitgenommen.Das Verschließen der Öffnung erfolgt in umgekehrter Reihenfolge.

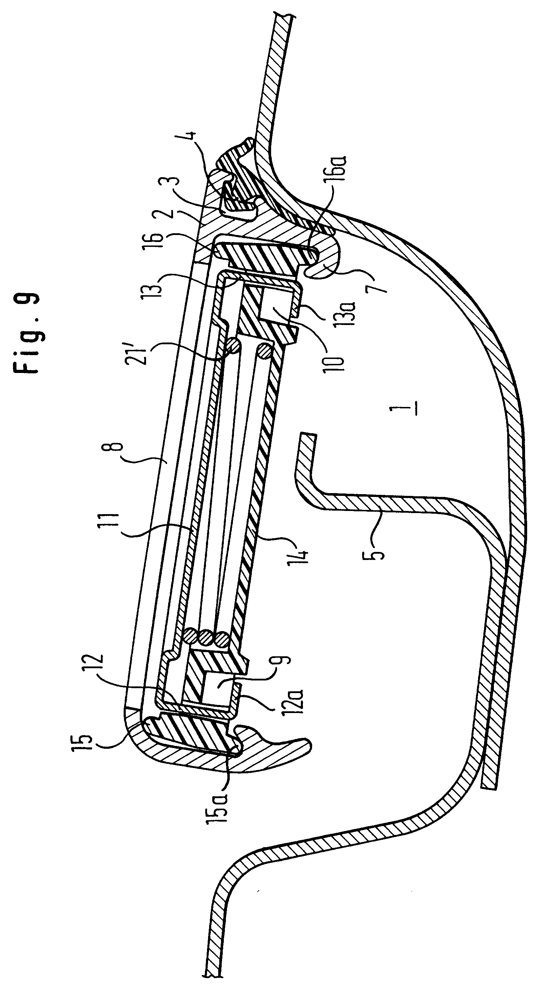

Die Figuren 8 und 9 zeigen eine zweite Ausführungsform des Schiebers 11 und des Schieberträgers 14. Für diese Ausführung wurde die Abdeckleiste 2 so abgeändert, daß die Stege 6, 7 nach oben in Richtung zum Schieber 11 abgewinkelt sind und dadurch nutartige Seitenführungen entstehen. Der Schieberträger 14 ist an den beiden Längsseiten an der unteren Seite mit Wülsten 15a, 16a versehen, so daß er sicher in den Seitenführungen geführt ist. Im oberen Bereich hat der Schieberträger 14 eine Ausnehmung, die eine Feder 21' aufnimmt und den Schieber 11 ständig nach oben drückt. Die Fig. 8 zeigt die Schließlage der Öffnung 8. Die Gleitstege 12a, 13a der Seitenstege 12, 13 sind bei dieser Ausführung nach innen, d. h. aufeinander zu gerichtet. Entsprechend muß die Lage der Führungsschienen 9, 10 ausgerichtet sein, die jedoch erst dann von den Gleitstegen 12a, 13a untergriffen werden, wenn der Schieber 11 aus seiner eingedrückten Mittellage in der Öffnung 8 geringfügig in Längsrichtung verschoben wurde. In der eingedrückten Stellung des Schiebers 11 wird eine nicht näher dargestellte Sperre überwunden. Nachdem der Schieber 11 in seiner eingedrückten Stellung ein erstes Wegstück seitlich in der Abdeckleiste verschoben wurde, stößt er gegen einen Anschlag am Schieberträger 14. Bei der weiteren Verschiebebewegung in Längsrichtung wird der Schieberträger 14 bis zu einem nicht dargestellten Endanschlag an den Führungsstegen 9, 10 der Abdeckleiste mitgenommen. Beim Verfahren in der entgegengesetzten Richtung wird der Schieberträger 14 mit dem Schieber 11 zunächst bis vor einen weiteren nicht dargestellten Anschlag auf den Führungsstegen 9, 10 der Abdeckleiste 2 verschoben. Danach kann der Schieber 11 um eine geringe Wegstrecke weitergeschoben werden, wodurch die Verrastung in dem Schieberträger gelöst wird und die Öffnung 8 verschlossen werden kann.

Das in der Figur 10 dargestellte bevorzugte Ausführungsbeispiel der verschiedenen Varianten unterscheidet sich nach den anderen Beispielen insbesondere dadurch, daß der Schieber, der Schieberträger und die Federn als Einheit komplett vormontiert werden können, so daß diese vormontierte Baueinheit als Ganzes praktisch mit einem Handgriff von unten her in die Abdeckleiste eingeschoben und in der Abdeckleistenöffnung 8 arretiert werden kann. Diese Ausführungsform besteht aus einem Schieberträger 21, zwei flachen Formfedern 22, 23 sowie einem mit dem Schieberträger 21 verrastbaren Schieber 24. Der Schieberträger 21 ist ein einstückiges z. B. aus Kunststoff gefertigtes Formteil. Der Schieberträger 21 hat eine flache Grundkontur und ist an seinen beiden Längsseiten mit sich über die gesamte Länge erstreckenden Führungsnuten 25, 26 versehen, die in Führungsstege 27, 28 der bei diesem Beispiel nicht dargestellten Abdeckleiste eingreifen. Die Stege 27, 28 sind an der dem Schieber 24 abgewandten Seite angeordnet. In den beiden Stirnendbereichen ist der Schieberträger 21 mit federnden Gegenlagern 29, 210 ausgerüstet, deren äußere freie Enden in etwa mit den Außenflächen des Schieberträgers 21 fluchten. Die Führungsnuten 25, 26 sind in diesen Bereichen unterbrochen. Die Gegenlager 29, 210 sind durch jeweils einen erhöhten Mittelsteg 211 verbunden. An diesen Mittelstegen 211 sind beidseitig in Mittellängsrichtung des Schieberträgers 21 verlaufende Rückstellfedern 212, 213 angeformt, deren einander abgewandte freie Enden an festen Querstegen 214, 215 des Schieberträgers 21 angeformt sind. Die Rückstellfedern 212, 213 beschreiben eine geschwungene, gekröpfte Form.

Jede Formfeder 22, 23 ist aus einem nichtrostenden Federstahlblech gefertigt. An jeder Längsseite ist sie mit zwei quer zu den Längskanten sich erstreckenden Ausstanzungen 216, 217 versehen, die auch Einschnitte sein könnten und an einer der Mittellängsachse zugeordneten ebenen Fläche 218 enden. Dadurch werden Endzungen 219, 220 und Mittelzungen 221 gebildet. Die Endzungen 219, 220 sind jeweils zweifach, die Mittelzungen 221 einfach abgewinkelt, so daß die Längskanten der Endzungen 219, 220 nach oben in Richtung zum Schieber 24 und die Längskanten der Mittelzunge 221 entgegengesetzt dazu gerichtet sind.

Der Schieber 24 kann aus Kunststoff oder Metall gefertigt sein. Er ist an den Längsseiten mit Seitenstegen 222 versehen, die auf den Schieberträger 21 gerichtet sind. An den Seitenstegen 222 sind im dargestellten Ausführungsbeispiel beidseits jeweils vier vorstehende Rastzungen 223 angeformt, die in entsprechende Rastausnehmungen 224 des Schieberträgers 1 einrasten, wenn der Schieber 24 mit dem Schieberträger 21 gekoppelt ist. Die Seitenstege 222 des Schiebers 24 greifen dann in Aufnahmenuten 225, 226 des Schieberträgers 21 ein, wobei die freien Kanten der Seitenstege 222 zu beiden Seiten an den Gegenlagern 29, 210 des Schieberträgers 21 anliegen. Die Seitenstege 222 des Schiebers sind in diesem Bereich ausgenommen. Es ergibt sich aus der Figur 10, daß zur Montage der aus dem Schieberträger 21, den Formfedern 22, 23 und dem Schieber 24 gebildeten Baueinheit zunächst die Formfedern 22, 23 so in den Schieberträger 21 einzulegen sind, daß deren Mittelzungen 221 auf den Gegenlagern 29, 210 aufliegen. Eine Verschiebung in beiden Richtungen wird durch die angepaßte Ausnehmung verhindert. Anschließend wird der Schieber 24 mit seinen Laschen 223 auf den Schieberträger 21 aufgesetzt und über die Öffnungen 224 an diesen fixiert. Diese auf diese Weise komplett vormontierte Baueinheit kann dann von unten her in eine nicht dargestellte Abdeckleiste eingeführt und dort in Längsrichtung verschoben werden. Dazu besitzt die Abdeckleiste an ihrer Unterseite eine Ausklinkung der Führungsstege, die zumindest so lang ist, daß die vormontierte Baueinheit mit dem Schieber 24 nach oben gerichtet auf ihrer ganzen Länge durch die Ausklinkung gegen die Unterseite der Abdeckleiste bewegt und danach in Längsrichtung der Abdeckleiste in Richtung auf die Schieberöffnung 8 zu verschoben werden kann. Hat die Baueinheit die Schieberöffnung erreicht, springt der Schieber 24 entgegen der Wirkung der Federn 22, 23 nach oben in die Öffnung 8 der Abdeckleiste hinein und ist damit in der Abdeckleistenöffnung arretiert.

Zum Freigeben der Abdeckleistenöffnung wird zunächst der Schieber 24 nach unten gedrückt. Da die freien Kanten der Randstege 222 auf den Gegenlagern 29, 210 aufliegen, werden diese ebenfalls unterhalb der Führungsstege der Abdeckleiste nach unten gedrückt. Die geöffnete Endstellung wird durch ebenso wie bei den anderen Ausführungsbeispielen nicht dargestellte aufgeklippste Endanschläge an den Führungsstegen der Abdeckleiste begrenzt. Wenn die Baueinheit zum Verschließen der Öffnung in die entgegengesetzte Richtung verfahren wird, springt der Schieber 24 durch die Federwirkung selbsttätig nach oben, sobald er die entsprechende Stellung im Öffnungsbereich der Abdeckleiste erreicht hat und der Gegendruck des Schiebers 24 aufgehoben ist.

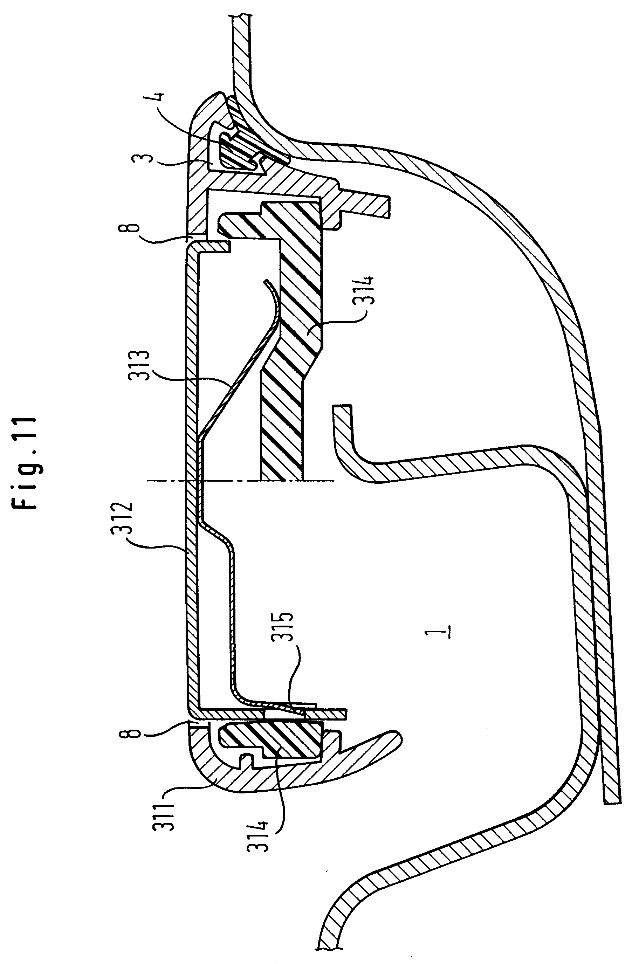

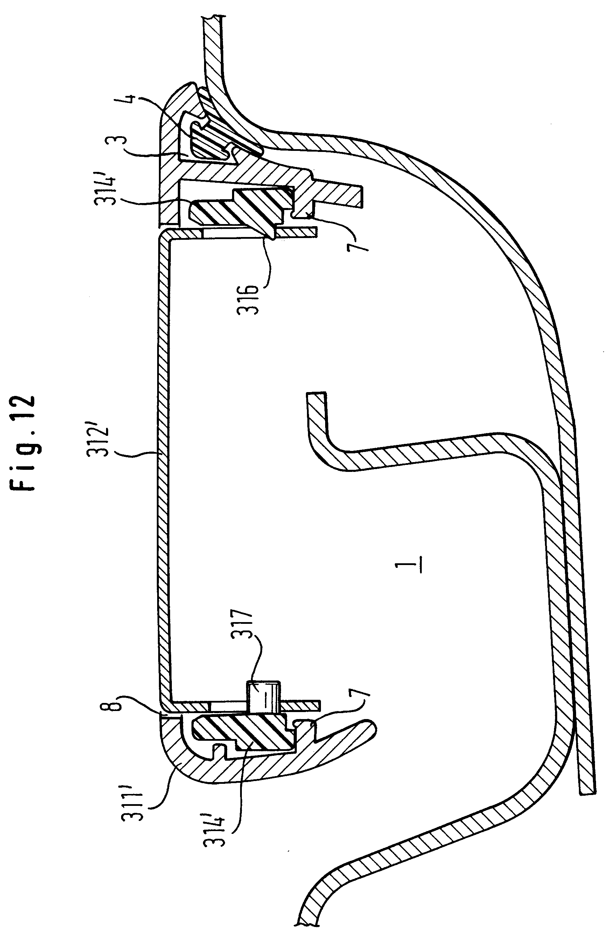

In der Figur 11 ist eine weitere Ausführungsvariante dargestellt. Dieses Beispiel unterscheidet sich von den anderen Beispielen dadurch, daß der Querschnitt der Abdeckleiste 311 sowie des Schiebers 312, der Formfeder 313 und des Schieberträgers 314 abgewandelt sind. Auch bei diesem Beispiel ist es ebenso wie bei dem Beispiel nach Fig. 12 möglich, zunächst den Schieberträger 314, 314' von unten her in die Abdeckleiste 311, 311' einzusetzen und anschließend im Bereich der Abdeckleistenöffnung 8 von oben her den Schieber 312, 312' mit der Feder 313 auf den Schieberträger 314, 314' aufzurasten. Aus dieser Figur ergibt sich auch, daß durch eine Ausbiegung 315 der Feder 313, erkennbar auf der linken Seite der Figur 11, die Feder mit dem Schieber 312 verrastet, wenn dieser von oben her auf die Feder und den Schieberträger aufgedrückt wird. In der Fig. 12 ist die Feder fortgelassen worden, um zu verdeutlichen, wie die seitlichen Flansche des nur teilweise dargestellten Schieberträgers 314' bei 316' bzw. 317 verbunden werden können.

## Patentansprüche

1. Abdeckleiste für eine in ein Fahrzeugdach eingelassene Rinne zur Aufnahme und Halterung eines Dachlastenträgers, dessen Stützfüße durch in der Abdeckleiste vorgesehene Öffnungen hindurchgreifen, die durch in Längsrichtung der Abdeckleiste hin- und herbewegliche, durch Federn belastete Schieber derart verschließbar sind, daß in den Verschlußstellungen die der Rinne abgewandten Außenflächen der Schieber im wesentlichen flächenbündig zu der Außenfläche der Abdeckleiste stehen, und die Schieber in den Offenstellungen von außen verdeckte Lagen unter der Abdeckleiste einnehmen, dadurch gekennzeichnet, daß jeder Schieber (11, 24, 312, 312') mit einem mit diesem eine Baueinheit bildenden Schieberträger (14, 21, 314, 314') verbunden und gemeinsam mit dem Schieberträger in Längsrichtung der Abdeckleiste (2, 311, 311') verschiebbar ist, und daß die Federn (21', 22, 23, 313) derart geformt und angeordnet sind, daß sie sich ausschließlich zwischen dem Schieber (11, 24, 312, 312') und dem Schieberträger (14, 21, 314, 314') abstützen.

2. Abdeckleiste nach Anspruch 1, dadurch gekennzeichnet, daß jedem Schieber (11, 24, 312, 312') wenigstens eine Formfeder(21', 22, 23, 313) zugeordnet ist.

3. Abdeckleiste nach den Ansprüchen 1 oder 2, dadurch gekennzeichnet, daß die Formfeder (22, 23) an jeder Längsseite vorgesehen ist, daß jede Formfeder zwei quer zu den Längskanten verlaufende Ein- oder Ausschnitte (216, 217) aufweist, daß die in den Endbereichen liegenden von den Ein- oder Ausschnitten (216, 217) begrenzten Endzungen (219,220) in Richtung zum Schieber (24) abgewinkelt sind, und daß die zwischen den Ein- oder Ausschnitten (216, 217) liegenden Mittelzungen (221) entgegengesetzt abgewinkelt sind.

4. Abdeckleiste nach Anspruch 3, dadurch gekennzeichnet, daß die Ein- oder Ausschnitte (216, 217) im Abstand zur Mittellängsachse der Formfeder (22, 23) enden, und daß die Endzungen (219, 220) zweifach abgewinkelt und die Mittelzungen (221) einfach abgewinkelt sind.

5. Abdeckleiste nach den Ansprüchen 2 bis 4, dadurch gekennzeichnet, daß die Längskanten der Mittelzungen (221) gegenüber den Längskanten der Innenzungen (219, 220) in Richtung zur Mittellängsachse der Formfeder (22, 23) verspringen.

6. Abdeckleiste nach einem der Ansprüche 3 bis 5, dadurch gekennzeichnet, daß der der Mittellängsachse zugeordnete Bereich der Formfeder (22, 23) als ebene Fläche (218) ausgebildet ist.

7. Abdeckleiste nach Anspruch 1, dadurch gekennzeichnet, daß der Schieber (24) an seinen Längsseiten mit durchgehenden Seitenstegen (222) versehen ist, die in den Endbereichen Widerlager für die Endzungen (219, 220) der Formfedern (22, 23) bilden.

8. Abdeckleiste nach Anspruch 7, dadurch gekennzeichnet, daß an die freien Kanten der Seitenstege (222) Rastzungen (223) zur Verrastung mit dem Schieberträger (21) angeformt sind.

9. Abdeckleiste nach den Ansprüchen 7 oder 8, dadurch gekennzeichnet, daß die Höhe der Seitenstege (223) wesentlich geringer ist als die Breite des Schiebers (24).

10. Abdeckleiste nach Anspruch 1, dadurch gekennzeichnet, daß der Schieberträger (1) an beiden Längsseiten mit in Längsrichtung sich erstreckenden Führungsnuten (5, 6) versehen ist, in die Führungsstege der Abdeckleiste eingreifen.

11. Abdeckleiste nach Anspruch 10, dadurch gekennzeichnet, daß die Führungsnuten (25, 26) in quer zur Längsebene des Schieberträgers (21) stehenden Stegen (27,28) angeordnet sind.

12. Abdeckleiste nach einem der Ansprüche 1 bis 11, dadurch gekennzeichnet, daß in den Stirnendbereichen des Schieberträgers (21) lagegerecht zu den Mittelzungen (221) der Formfedern (22, 23) federnde Gegenlager (29, 210) angeordnet sind, deren einander abgewandte Endbereiche in der Schließstellung der Baueinheit in Ausklinkungen der Führungsstege der Abdeckleiste eingreifen.

13. Abdeckleiste nach Anspruch 12, dadurch gekennzeichnet, daß die federnden Gegenlager (29, 210) an den zugehörigen Bereichen der Seitenstege (222) des Schiebers (24) anliegen.

14. Abdeckleiste nach den Ansprüchen 12 oder 13, dadurch gekennzeichnet, daß die federnden Gegenlager (29, 210) über einen erhöhten Mittelsteg (211) verbunden sind, und daß beidseitig an den Mittelsteg (211) in Mittellängsrichtung des Schieberträgers (21) verlaufende Rückstellfedern (212, 213) angeformt sind.

15. Abdeckleiste nach Anspruch 14, dadurch gekennzeichnet, daß die freien, einander abgewandten Enden (214) der Rückstellfedern (212, 213) an den Schieberträger (21) fest angeformt sind.

16. Abdeckleiste nach den Ansprüchen 1 bis 15, dadurch gekennzeichnet, daß zur Begrenzung der Schiebebewegungen der Baueinheit in der Abdeckleiste auf die Führungsstege der Abdeckleiste Anschläge aufgesetzt, beispielsweise aufgeklippst, sind.

17. Abdeckleiste nach einem der Ansprüche 1 bis 16, dadurch gekennzeichnet, daß der Schieberträger (14, 21) als einstückiges Formteil ausgebildet ist.

18. Abdeckleiste nach einem oder mehreren der Ansprüche 1 bis 17, dadurch gekennzeichnet, daß der Schieber (11) an seiner Unterseite mit Gleitstegen (12a, 13a) versehen ist, die während der Bewegung des Schiebers in Längsrichtung der Abdeckleiste (2) verlaufende und daran befestigte Führungsschienen (9, 10) untergreifen.

19. Abdeckleiste nach Anspruch 18, dadurch gekennzeichnet, daß der Schieberträger (14) an seinen Längsseiten mit Führungswülsten (15, 16) und/oder Führungsnuten (17, 18) versehen ist.

20. Abdeckleiste nach Anspruch 19, dadurch gekennzeichnet, daß der Schieberträger (14) an der unteren, der Rinne (1) zugewandten Seite mit Führungsnuten (17, 18) und an der oberen, der Rinne abgewandten Seite jeweils an beiden Längsseiten mit Führungswülsten (15,16) versehen ist.

21. Abdeckleiste nach einem der Ansprüche 18 bis 20, dadurch gekennzeichnet, daß der Schieberträger (14) Durchstecköffnungen für von der Außenfläche des Schiebers (11) nach außen oder innen gerichtete Gleitstege (12a, 13a) aufweist.

22. Abdeckleiste nach Anspruch 21, dadurch gekennzeichnet, daß der Schieberträger (14) mit Längsführungen für die Seitenstege (12,13) des Schiebers (11) versehen ist, so daß der Schieber (11) gegenüber dem Schieberträger (14) relativ verfahrbar ist, und daß der Schiebeweg beim Öffnen und Schließen durch Anschläge begrenzt ist.

23. Abdeckleiste nach Anspruch 18, dadurch gekennzeichnet, daß sich die Führungsschienen (9, 10) der Abdeckleiste (2) über die an die Öffnungen (8) angrenzenden Bereiche hinaus erstrecken.

24. Abdeckleiste nach einem oder mehreren der vorhergehenden Ansprüche 1 - 23, dadurch gekennzeichnet, daß zwischen dem Schieber (11) und dem Schieberträger (14) eine Rückstellfeder in Form einer Druckfeder (21'), einer Blattfeder oder dergleichen angeordnet ist.

25. Abdeckleiste nach einem oder mehreren der Ansprüche 18 bis 24, dadurch gekennzeichnet, daß nach außen abgewinkelten Gleitstegen (12a, 13a) des Schiebers (11) Gleitschienen zugeordnet sind.

26. Abdeckleiste nach Anspruch 18, dadurch gekennzeichnet, daß die Abdeckleiste (2) eine mittige Absenkung aufweist, daß die Öffnungen (8) innerhalb der Absenkung liegen, und daß der Schieberträger (14) an den einander abgewandten Seiten-Führungsnuten aufweist, in die die Führungsstege (23) der Abdeckleiste (2) eingreifen.

27. Abdeckleiste nach einem oder mehreren der Ansprüche 18 bis 26, dadurch gekennzeichnet, daß der Schieberträger (14) in Führungsstegen (6, 7) der Abdeckleiste (2) verschiebbar geführt ist.

## Claims

1. Covering strip for a channel provided in a vehicle roof and intended for receiving and securing a roof rack, the supporting feet of which engage through openings which are provided in the covering strip and can be closed by spring-loaded slides, which can be moved back and forth in the longitudinal direction of the covering strip, such that, in the closure positions, the outer surfaces of the slides which are remote from the channel are essentially flush with the outer surface of the covering strip, and, in the open positions, the slides assume externally concealed positions beneath the covering strip, characterized in that each slide (11, 24, 312, 312') is connected to a slide carrier (14, 21, 314, 314'), which forms a structural unit with the slide, and can be displaced, together with the slide carrier, in the longitudinal direction of the covering strip (2, 311, 311'), and in that the springs (21', 22, 23, 313) are shaped and arranged such that they are supported exclusively between the slide (11, 24, 312, 312') and the slide carrier (14, 21, 314, 314').

2. Covering strip according to Claim 1, characterized in that each slide (11, 24, 312, 312') is assigned at least one shaped spring (21', 22, 23, 313).

3. Covering strip according to Claim 1 or 2, characterized in that the shaped spring (22, 23) is provided on each longitudinal side, in that each shaped spring has two incisions or cutouts (216, 217) running transversely with respect to the longitudinal edges, in that the end tongues (219, 220), which are located in the end regions and are delimited by the incisions or cutouts (216, 217), are angled in the direction of the slide (24), and in that the central tongues (221), which are located between the incisions or cutouts (216, 217), are angled in the opposite direction.

4. Covering strip according to Claim 3, characterized in that the incisions or cutouts (216, 217) terminate at a distance from the central longitudinal axis of the shaped spring (22, 23), and in that the end tongues (219, 220) are angled twice and the central tongues (221) are angled once.

5. Covering strip according to Claims 2 to 4, characterized in that the longitudinal edges of the central tongues (221) are offset in the direction of the central longitudinal axis of the shaped spring (22, 23) with respect to the longitudinal edges of the end tongues (219, 220).

6. Covering strip according to one of Claims 3 to 5, characterized in that that region of the shaped spring (22, 23) which is assigned to the central longitudinal axis is designed as a planar surface (218).

7. Covering strip according to Claim 1, characterized in that, on its longitudinal sides, the slide (24) is provided with continuous side webs (222) which, in the end regions, form abutments for the end tongues (219, 220) of the shaped springs (22, 23).

8. Covering strip according to Claim 7, characterized in that latching tongues (223) are integrally formed on the free edges of the side webs (222) for the purpose of latching with the slide carrier (21).

9. Covering strip according to Claims 7 or 8, characterized in that the height of the side webs (223) is considerably smaller than the width of the slide (24).

10. Covering strip according to Claim 1, characterized in that, on the two longitudinal sides, the slide carrier (21) is provided with guide grooves (25, 26) which extend in the longitudinal direction and in which guide webs of the covering strip engage.

11. Covering strip according to Claim 10, characterized in that the guide grooves (25, 26) are arranged in webs (27, 28) located transversely with respect to the longitudinal plane of the slide carrier (21).

12. Covering strip according to one of Claims 1 to 11, characterized in that resilient abutments (29, 210) are arranged in the end regions of the slide carrier (21) in a position appropriate for the central tongues (221) of the shaped springs (22, 23), the mutually remote end regions of which abutments engage, in the closed position of the structural unit, in notches of the guide webs of the covering strip.

13. Covering strip according to Claim 12, characterized in that the resilient abutments (29, 210) rest against the associated regions of the side webs (222) of the slide (24).

14. Covering strip according to Claims 12 or 13, characterized in that the resilient abutments (29, 210) are connected via an elevated central web (211), and in that restoring springs (212, 213) running in the central longitudinal direction of the slide carrier (21) are integrally formed on both sides of the central web (211).

15. Covering strip according to Claim 14, characterized in that the free, mutually remote ends (214) of the restoring springs (212, 213) are integrally formed in a fixed manner on the slide carrier (21).

16. Covering strip according to Claims 1 to 15, characterized in that, in order to limit the sliding movements of the structural unit in the covering strip, stops are positioned, for example clipped, on the guide webs of the covering strip.

17. Covering strip according to one of Claims 1 to 16, characterized in that the slide carrier (14, 21) is designed as an integral moulding.

18. Covering strip according to one or more of Claims 1 to 17, characterized in that, on its underside, the slide (11) is provided with sliding webs (12a, 13a) which, during the movement of the slide, engage beneath guide rails (9, 10) which run in the longitudinal direction of the covering strip (2) and are fastened thereon.

19. Covering strip according to Claim 18, characterized in that, on its longitudinal sides, the slide carrier (14) is provided with guide beads (15, 16) and/or guide grooves (17, 18).

20. Covering strip according to Claim 19, characterized in that, on the bottom side facing the channel (1), the slide carrier (14) is provided with guide grooves (17, 18) and, on the top side remote from the channel, the slide carrier is provided with guide beads (15, 16) on the two longitudinal sides in each case.

21. Covering strip according to one of Claims 18 to 20, characterized in that the slide carrier (14) has insertion openings for sliding webs (12a, 13a) which are directed outwards or inwards from the outer surface of the slide (11).

22. Covering strip according to Claim 21, characterized in that the slide carrier (14) is provided with longitudinal guides for the side webs (12, 13) of the slide (11), with the result that the slide (11) can be displaced relative to the slide carrier (14), and in that the sliding path, during opening and closing operations, is delimited by stops.

23. Covering strip according to Claim 18, characterized in that the guide rails (9, 10) of the covering strip (2) extend beyond the regions adjoining the openings (8).

24. Covering strip according to one or more of the preceding Claims 1 - 23, characterized in that a restoring spring in the form of a compression spring (21'), of a leaf spring or the like is arranged between the slide (11) and the slide carrier (14).

25. Covering strip according to one or more of Claims 18 to 24, characterized in that outwardly angled sliding webs (12a, 13a) of the slide (11) are assigned sliding rails.

26. Covering strip according to Claim 18, characterized in that the covering strip (2) has a central depression, in that the openings (8) are located within the depression, and in that, on the mutually remote sides, the slide carrier (14) has guide grooves in which the guide webs (6, 7) of the covering strip (2) engage.

27. Covering strip according to one or more of Claims 18 to 26, characterized in that the slide carrier (14) is guided displaceably in guide webs (6, 7) of the covering strip (2).

## Revendications

1. Baguette de recouvrement pour une gouttière ménagée dans un toit de véhicule pour recevoir et retenir un support des charges du toit, dont les pieds d'appui passent à travers des ouvertures prévues dans la baguette de recouvrement, qui peuvent être fermées par des coulisseaux déplaçables suivant un mouvement de va-et-vient dans la direction longitudinale de la baguette de recouvrement, chargés par des ressorts, de telle sorte que dans les positions de fermeture, les surfaces extérieures des coulisseaux éloignées de la gouttière soient sensiblement en affleurement avec la surface extérieure de la baguette de recouvrement et que les coulisseaux, dans les positions d'ouverture, occupent des positions cachées de l'extérieur sous la baguette de recouvrement, caractérisée en ce que chaque coulisseau (11, 24, 312, 312') est relié à un support de coulisseau (14, 21, 314, 314') formant une unité de construction avec celui-ci et est déplaçable conjointement avec le support de coulisseau dans la direction longitudinale de la baguette de recouvrement (2, 311, 311') et on ce que les ressorts (21', 22, 23, 313) sont formés et disposés de façon qu'ils prennent appui exclusivement entre le coulisseau (11, 24, 312, 312') et le support de coulisseau (14, 21, 314, 314').

2. Baguette de recouvrement selon la revendication 1, caractérisée en ce qu'il est associé à chaque coulisseau (11, 24, 312, 312') au moins un ressort de forme (21', 22, 23, 313°).

3. Baguette de recouvrement selon les revendications 1 ou 2, caractérisée en ce que le ressort de forme (22, 23) est prévu à chaque côté longitudinal, en ce que chaque ressort de forme présente deux entailles ou découpes (216, 217) s'étendant transversalement aux arêtes longitudinales, en ce que les languettes d'extrémité (219, 220) se situant dans les zones d'extrémité, délimitées par les entailles ou découpes (216, 217) sont coudées en direction du coulisseau (24), et en ce que les languettes centrales (221) se trouvant entre les entailles ou découpes (216, 217) sont coudées dans le sens opposé.

4. Baguette de recouvrement selon la revendication 3, caractérisée en ce que les entailles ou découpes (216, 217) se terminent à une certaine distance de l'axe longitudinal central du ressort de forme (22,23) et en ce que les languettes d'extrémité (219, 220) sont coudées deux fois et les languettes centrales (221) sont coudées une fois.

5. Baguette de recouvrement selon les revendications 2 à 4, caractérisée on ce que les arêtes longitudinales des languettes centrales (221) bondissent par rapport aux arêtes longitudinales des languettes intérieures (219, 220) en direction de l'axe longitudinal central du ressort de forme (22, 23).

6. Baguette de recouvrement selon l'une des revendications 3 à 5, caractérisée en ce que la zone du ressort de forme (22, 23) associée à l'axe longitudinal central est réalisée sous forme de face plane (218).

7. Baguette de recouvrement selon la revendication 1, caractérisée on ce que le coulisseau (24) est pourvu à ses côtés longitudinaux de nervures latérales continues (222) qui forment dans les zones d'extrémité des butées pour les languettes d'extrémité (219, 220) des ressorts de forme (22,23).

8. Baguette de recouvrement selon la revendication 7, caractérisée en ce que sont formées d'un seul tenant aux arêtes libres des nervures latérales (222) des languettes d'enclenchement (223) pour l'enclenchement avec le support de coulisseau (21).

9. Baguette de recouvrement selon les revendictions 7 ou 8, caractérisée on ce que la hauteur des nervures latérales (223) est bien plus réduite que la largeur du coulisseau (24).

10. Baguette de recouvrement selon la revendication 1, caractérisée on ce que le support de coulisseau (1) présente aux deux côtés longitudinaux des rainures de guidage (5,6) s'étendant dans la direction longitudinale qui s'engagent dans les nervures de guidage de la baguette de recouvrement.

11. Baguette de recouvrement selon la revendication 10, caractérisée en ce que les rainures de guidage (25,26) sont disposées dans des nervures (27, 28) s'étendant transversalement au plan longitudinal du support de coulisseau (21).

12. Baguette de recouvrement selon l'une des revendication 1 à 11, caractérisée en ce que sont disposés dans les zones d'extrémité frontales du support de coulisseau (21), dans la bonne position relativement aux languettes centrales (221) des ressorts de forme (22,23), des contre-paliers élastiques (29, 210) dont les zones d'extrémité éloignées l'une de l'autre s'engagent dans la position de fermeture de l'unité de construction dans des encoches des nervures de guidage de la baguette de recouvrement.

13. Baguette de recouvrement selon la revendication 12, caractérisée en ce que les contre-paliers élastiques (29, 210) s'appliquent aux zones associées des nervures latérales (222) du coulisseau (24).

14. Baguette de recouvrement selon les revendications 12 ou 13 , caractérisée en ce que les contre-paliers élastiques (29, 210) sont reliés par une nervure centrale surélevée (211) et en ce que sont formés d'un seul tenant, des deux côtés à la nervure centrale (211), des ressorts de rappel (212,213) s'étendant dans la direction longitudinale centrale du support de coulisseau (21).

15. Baguette de recouvrement selon la revendication 14, caractérisée en ce que les extrémités libres éloignées l'une de l'autre (214) des ressorts de rappel (212, 213) sont formées solidement sur le support de coulisseau (21).

16. Baguette de recouvrement selon les revendications 1 à 15, caractérisée en ce que, pour délimiter des mouvements de déplacement de l'unité de construction dans la baguette de recouvrement, des butées sont placées, par exemple, enclenchées, sur les nervures de guidage de la baguette de recouvrement.

17. Baguette de recouvrement selon l'une des revendication 1 à 16, caractérisée en ce que le support de couliseau (14, 21) est réalisé sous forme de pièce moulée en une pièce.

18. Baguette de recouvrement selon l'une ou plusieurs des revendications 1 à 17, caractérisée en ce que le coulisseau (11) présente à son côté inférieur des nervures de glissement (12a, 13a) qui,pendant le déplacement du coulisseau, passent sous des rails de guidage (9, 10) s'étendant dans la direction longitudinale de la baguette de recouvrement (2) et fixés à celle-ci.

19. Baguette de recouvrement selon la revendication 18, caractérisée en ce que le support de coulissesu (14) présente à ses côtés longitudinaux des bourelets de guidage (15, 16) et/ou des rainures de guidage (17, 18).

20. Baguette de recouvrement selon la revendication 19, caractérisée on ce que le support de coulisseau (14) est pourvu au côté inférieur orienté vers la gouttière (1) de rainures de guidage (17, 18) et au côté supérieur éloigné de la gouttière, respectivement aux deux côtés longitudinaux de bourelets de guidage (15, 16).

21. Baguette de recouvrement selon l'une des revendications 18 à 20, caractérisée an ce que le support de coulisseau (14) présente des ouvertures de passage pour des nervures de glissement (12a, 13a) orientées depuis la surface extérieure du coulisseau (11) vers l'extérieur ou l'intérieur.

22. Baguette de recouvrement selon la revendication 21, caractérisée en ce que le support de coulisseau (14) présente des guidages longitudinaux pour les nervures latérales (12,13) du coulisseau (11) de telle sorte que le coulisseau (11) soit déplaçable relativement par rapport au support de coulissement (14), et en ce que le trajet de déplacement, lors de l'ouverture et de la fermeture, soit délimité par des butées.

23. Baguette de recouvrement selon la revendication 18, caratérisée en ce que les rails de guidage (9, 10) de la baguette de recouvrement (2) s'étendent au-delà des zones avoisinant les ouvertures (8).

24. Baguette de recouvrement selon l'une ou plusieurs des revendications précédentes 1-23, caractérisée en ce qu'il est disposé entre le coulisseau (11) et le support de coulisseau (14) un ressort de rappel sous forme de ressort de pression (21'), d'un ressort à lames ou analogue.

25. Baguette de recouvrement selon l'une ou plusieurs des revendications 18 à 24, caractérisée en ce que des rails de guidage sont associés à des nervures de glissement (12a, 13a) coudées vers l'extérieur du coulisseau (11).

26. Baguette de recouvrement selon la revendication 18, caractérisée en ce que la baguette de recouvrement (2) présente un affaissement central, en ce que les ouvertures (8) se situent à l'intérieur de l'affaissement, et en ce que le support de coulisseau (14) présente aux côtés éloignés l'un de l'autre des rainures de guidage dans lesquelles s engagent les nervures de guidage (23) de la baguette de recouvrement (2).

27. Baguette de recouvrement selon l'une ou plusieurs des revendications 18 à 26, caractérisée en ce que le support de coulisseau (14) est guidé de façon déplaçable dans les nervures de guidage (6, 7) de la baguette de recouvrement (2).
